Europäisches Patentamt

European Patent Office

Office européen des brevets

(11) Publication number: **0 348 217**
**A2**

(12) **EUROPEAN PATENT APPLICATION**

(21) Application number: **89306378.4**

(22) Date of filing: **23.06.89**

(51) Int. Cl.⁴: **F 16 K 1/20**
**F 16 K 1/228, F 16 K 5/20**

(30) Priority: **24.06.88 GB 8815031**

(43) Date of publication of application:
**27.12.89 Bulletin 89/52**

(84) Designated Contracting States: **DE ES FR IT SE**

(71) Applicant: **LASALLE MANUFACTURING LIMITED**
**International Base Greenwell Road**
**East Tullos Aberdeen AB1 4AX (GB)**

(72) Inventor: **Goodman, James**
**13 Leslie Close**
**Littleover Derby DE3 7AW (GB)**

(74) Representative: **Needle, Jacqueline et al**
**W.H. BECK, GREENER & CO 7 Stone Buildings Lincoln's Inn**
**London WC2A 3SZ (GB)**

(54) **A valve assembly.**

(57) A valve assembly (1), for example, for controlling the flow of bulk material from a duct (2) to a pressure vessel (3), has a cylindrical passageway in which a valve aperture is defined by way of a shear ring (9). A closure member (104) is mounted by way of a support member (24) on a shaft (15) for pivotal movement between the closed position illustrated and an open position in which the passageway (100) is unobstructed. The closure member (104) has a substantially annular surface (105) which co-operates with a complementary surface on the shear ring (9). A deformable sealing ring (27) is housed in an annular recess formed in the outer surface (105) of the closure member. In the closed position of the valve assembly, fluid under pressure is fed to the recess (26) by way of ducts (5, 34) to apply pressure to the inner surface of the ring (27) and thereby deform it into sealing contact with the ring (9). As the deformation of the sealing ring is outwardly the sealing ring is subjected only to natural expansion forces. This enables sealing rings to be employed having characteristics appropriate to the application of the valve assembly.

FIG.1

EP 0 348 217 A2

## Description

## A VALVE ASSEMBLY

The present invention relates to a valve assembly.

British Patent Specification No. 1,539,079 describes a valve assembly for controlling the flow of powdered, granular or slurried bulk materials between a duct and a pressure vessel. This valve assembly has a rotatable part spherical closure member which is rotated to open and close a valve aperture. In the closed position a sealing ring surrounding the valve aperture is deformed by fluid pressure to contact the closure member and thereby provide a good seal.

In this known arrangement, the fluid pressure is applied to the outer surface of the sealing ring to push it inwardly towards the closure member. However, the inner surface of the ring needs to suffer a dimensional reduction in order to seal the aperture whilst the application of fluid pressure to the sealing ring would normally cause the material of the ring to expand. This has the effect of setting up a complex multi-planar stress system in the surface of the sealing ring. It has been found that good surface contact between the sealing ring and the closing member can only be achieved by making the sealing ring from standard low hardness elastomers which have enhanced deformation characteristics but have low combined thresholds of temperature resistance and mechanical strength. Generally, this means that it is necessary to provide cooling to the valve assembly to attempt to extend the temperature resistance threshold of the sealing ring. In this respect, heating of the sealing ring lowers its specific mechanical strength.

There are now semi-rigid elastomers which have been specifically formulated to provide high thresholds of mechanical strength and temperature tolerance. However, these particular elastomers cannot be utilised in the known valve assembly as they cannot achieve the complex stress system which is needed in the surface of the sealing ring because of the structure of the known valve assembly.

It is an object of the present invention to provide a valve assembly which reduces the problems of the known assembly.

According to the present invention there is provided a valve assembly comprising means defining a valve aperture, and a closure member movable between a closed position in which it extends within and closes said aperture and an open position, and further comprising an endless, deformable sealing member carried by and surrounding said closure member, and means for deforming said sealing member outwardly whereby in the closed position said sealing member is caused to engage said aperture and to seal the closure member relative to the aperture.

Because the structure of the valve assembly enables the sealing member to be deformed outwardly, free natural expansion of the sealing member is enabled without complex stress patterns being set up. Futhermore, the sealing member may be made of a wide range of materials, particularly of the elastomers now available and so the valve assembly can take advantage of the superior operating characteristics of special elastomers formulated to provide high thresholds of mechanical strength and temperature tolerance.

In an embodiment, at least one further endless deformable sealing member may be carried by and surround said closure member. The or each further sealing member may be deformed outwardly either simultaneously or sequentially with said first sealing member.

In an embodiment, the or each endless sealing member is a sealing ring received in a substantially annular recess formed in an outer surface of the closure member. The sealing ring has elastomeric properties and the deforming means are arranged to supply fluid under pressure to an inner surface of the ring in a manner to cause natural expansion thereof. Preferably, the sealing ring has a circular cross-section, and the whole sealing ring is arranged to be moved outwardly from the recess by the supply of pressurised fluid.

In a preferred embodiment said valve aperture is a substantially annular inner surface defined around the inner surface of a substantially cylindrical passageway, and wherein said closure member is formed to have a substantially annular outer surface arranged to co-operate with said annular inner surface, and wherein said sealing member is carried by said annular outer surface. Preferably, the shape of said annular inner and outer surfaces are complementary, for example, said outer surface has a partial male toroidal form and said inner surface has a partial female toroidal form.

The term "partial toroidal form" is used throughout the specification and claims to refer to the shape of a surface obtained by taking a horizontal section between two spaced parallel planes through a toroid.

Naturally, the inner and outer surfaces need to be dimensioned to define a running clearance therebetween. It has been found that the use of complementary surfaces of partial toroidal form ensures that this running clearance can be kept to an absolute minimum.

Preferably, said inner surface is the inner surface of a shear ring which is of a rigid or semi-rigid construction in a wear resistant material and which is retained in a recess in the inner surface of said substantially cylindrical passageway.

Said closure member may comprise a substantially circular cone around which said annular outer surface extends, and wherein said closure member is mounted for pivotal movement into and away from said cylindrical passageway. The closure member may be mounted on a support member which in its turn is mounted on a shaft for pivotal movement about the axis of the shaft. The pivot axis of said shaft lies in a plane which extends at right angles to a plane containing the longitudinal axis of said closure member.

The shaft is coupled to a drive motor which is preferably provided with stops to limit the angle of pivotal movement of the closure member, for example, to approximately 80°. To facilitate replacement of the sealing ring, the movement of the closure member may be extended namually beyond its closed position.

Embodiments of the present invention will hereinafter be described, by way of example, with reference to the accompanying drawings, in which:

Figure 1 shows a vertical section of a valve assembly of the present invention,

Figure 2 shows a transverse section of the valve assembly of Figure 1,

Figure 3a shows schematically the deformation of a sealing ring of a known valve assembly, and

Figure 3b shows schematically the deformation of a sealing ring of a valve assembly of the present invention.

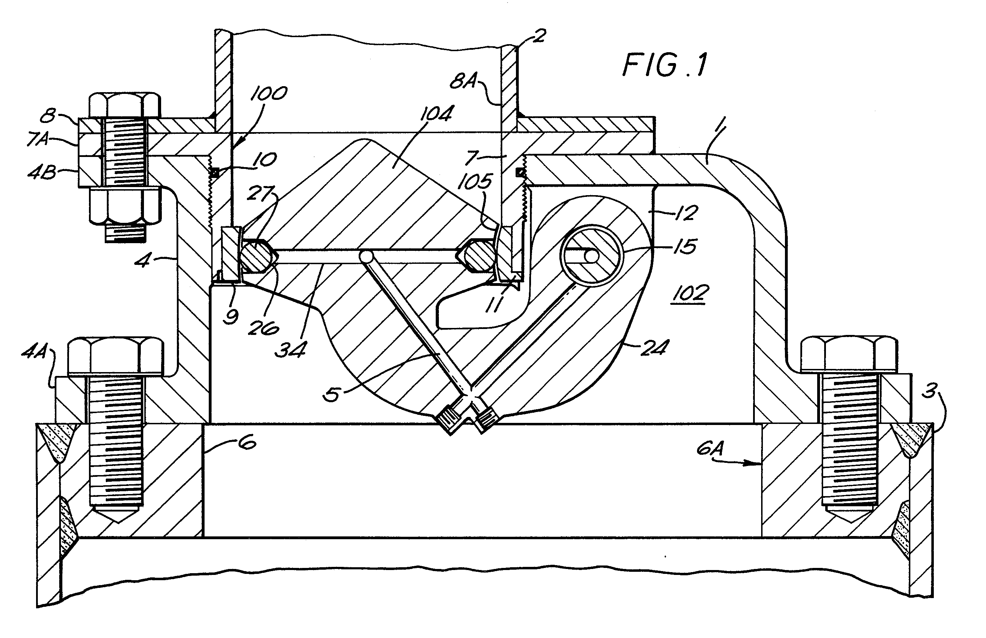

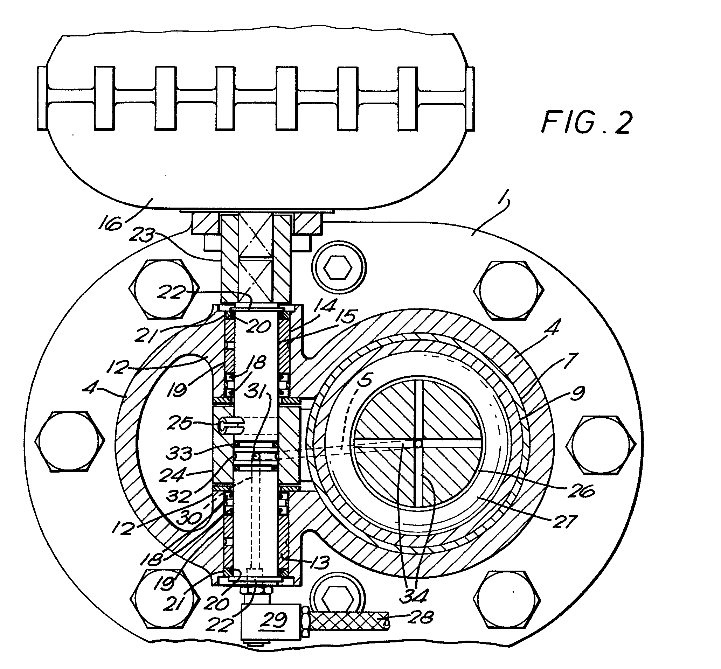

Figures 1 and 2 illustrate a valve assembly 1 for controlling the flow of powdered, granular or slurried bulk materials between a duct 2 and a container 3. The container 3, which is shown only in part, may be a pressure vessel chamber of a pneumatic conveyor.

The container 3 has an upper plate 6 in which a substantially elliptical aperture 6A for the passage of material is defined. The valve assembly 1 is bolted to the upper plate 6 and to an annular flange 8 surrounding a circular outlet 8A of the duct 2 and defines a path for the flow of material from the duct 2 into the container 3. The duct 2 may be, for example, the outlet of a material hopper or of a pipeline.

The valve assembly 1 has a housing 4 whose cross-section shape is substantially in the form of a circle fastened to a D-shape. At its base, the housing 4 has a substantially elliptical shaped, outwardly extending flange 4A which is bolted to the upper plate 6 of the container 3. The circular cross-section part of the housing 4 has a substantially cylindrical passageway 100 defined therein through which material passes, whilst the substantially D-shaped part of the housing 4 defines a chamber 102 for housing drive and bearing arrangements for a closure member 104.

The cylindrical material passageway 100 is defined by a cylindrical retaining member 7 which has an annular, radially outwardly extending flange 7A surrounding its upper open end. This flange 7A is bolted to the annular flange 8 of the duct 2 and to a part annular upper flange 4B provided on the circular cross-section part of the housing 4. At its lower end, the cylindrical retaining member 7 is provided with an annular recess in which a shear ring 9 is retained. This shear ring 9 is of a rigid or semi- rigid construction in a wear resistant material, and for example is a hard iron or steel casting. The shear ring 9 may be of a suitable shape, for example, it may be a circular annulus having a substantially circular or rectangular cross-section. Preferably, the inner surface of the ring 9 will be shaped to ensure enhanced sealing as described below, for example, the inner surface may be concave. In the illustrated embodiment the shear ring 9 is a circular annulus having a substantially cylindrical outer surface and an inner surface with a partial femal toroidal form. In this respect, it will be appreciated that the inner surface is a curved surface having a curve which transforms from concave to convex and back to concave around the circumference of the curve.

The shear ring 9 is firmly attached to the retaining member 7 such that there is a gas-tight seal between the shear ring 9 and the retaining member 7. In the embodiment illustrated, the attachment of the shear ring 9 to the retaining member 7 is by way of a bonding agent which also forms the gas-tight seal. In addition, a tab 11 is engaged in the recess in the retaining member 7 to ensure that the shear ring 9 is correctly located in the radial plane. An annular, elastomeric sealing ring 10 is located in a recess therefor in the outer surface of the retaining member 7 to provide a gas-tight seal between the retaining member 7 and the housing 4.

The cylindrical passageway 100 is arranged to be opened and closed by way of the closure member 104 which is movable by the drive and bearing arrangements housed in the chamber 102. It will be seen that the closure member comprises a substantially circular cone arranged coaxially with one arm of a support portion 24 which has a substantially U-shaped cross-section. The closure member 104 is pivotable about the axis of a drive shaft 15 which extends through a second arm of said support portion 24 between a closed position shown in Figure 1 and an open position, not illustrated. It will be seen that the longitudinal axis of the closure member extends at right angles relative to the axis of the drive shaft 15. In the open position of the closure member 104 the support portion 24 is received within the chamber 102 such that the axis of the closure member 104 extends at a small angle to the horizontal whereby the cylindrical passageway 100 is substantially unobstructed.

The closure member 104, as the shear ring 9, is of wear resistant material and of rigid construction to provide a powerful shearing effect when the closure member enters the shear ring on closing. For example, the closure member 104 is a hard iron or steel casing. The closure member 104 is formed to have a substantially annular outer surface 105 arranged to co-operate with the inner surface of the shear ring 9 when the valve is closed to enable sealing of the valve. The inner surface of the shear ring 9 thus forms a valve aperture. The shape of the outer surface 105 is complementary to the shape of the inner surface of the shear ring 9. For example, if the inner ring surface is concave, the outer surface 105 will be convex. In the illustrated embodiment, the outer surface 105 has a partial male toroidal form to complement the partial female toroidal form of the inner surface of the shear ring 9. Furthermore, the closure member 104 is constrained to follow a path on closure which positions the outer surface 105 at a very small clearance, practically of the order of 0.5mm from the inner surface of the shear ring 9.

An annular recess 26 is formed in the outer surface 105 of the closure member 104 and an elastomeric sealing ring 27, is received within the recess 26. This sealing ring is preferably a circular annulus with a substantially circular cross-section, the diameter of the ring being such that it has to be lightly stretched for fitting into the recess 26 such that the tension thereby introduced into the sealing ring 27 acts to hold the sealing ring 27 tightly in the recess 26. When the closure member 104 is in its closed position, compressed fluid, for example, compressed air, is applied to the inner surface of the sealing ring 27. This deforms the sealing ring 27 outwardly against the inner surface of the shear ring 9 causing the sealing ring 27 to expand and flatten against the shear ring 9 and thus seal the passageway 100 in the valve assembly 1. The compressed fluid is introduced into the valve assembly by a flexible hose 28 (Figure 2) coupled to a rotating joint 29 screwed into the end of the drive shaft 15. A central cylindrical hole 30 along the axis of the drive shaft 15 conducts the fluid to cross-drillings 31 in the centre of the length of the drive shaft 15 where it is affixed to the closure member 104. The cross-drillings 31 are connected to a circumferential groove 32 extending around the drive shaft 15 and the compressed fluid is contained in the groove 32 by means of annular elastomeric sealing rings 33. Two cylindrical, drilled bores 5 extend in the support member 24 at an angle to each other such that they cross and connect the circumferential groove 32 to cross-drillings 34 in the closure member 104. It is the fluid in these cross-drillings 34 which acts to inflate the sealing ring 27.

The drive and bearing arrangements for the drive shaft 15 are supported within the chamber 102 by way of two facing wall portions 12 of the housing 4 which extend in a common substantially vertical plane which defines the upright of the substantially D-shaped portion of the housing 4. The wall portions 12 are hollow and each house a respective bearing 13, 14 for a respective end of the drive shaft 15. The drive shaft 15 extends outwardly of the bearing 14 to an external drive motor 16 to which it is coupled. The drive motor 16 is provided with integral stops (not shown) to limit the travel of the closure member 104 to approximately 80°. Each bearing 13 and 14 includes twin shaft seals 18 and a bearing bush 19 having integral grease grooves and access drillings from external grease nipples (not shown). Leakage of grease outwardly from the bearings 13 and 14 is prevented by the insertion of a respective elastomeric sealing ring 20 backed up by a thrust washer 21 and held in place by a spring retaining clip 22. The clips 22 also serve to centralise the drive shaft 15 in the wall portions 12. The drive motor 16 is connected to the drive shaft 15 by a sliding coupling 23. The support member 24 of the closure member 104 is mounted on the central area of the drive shaft 15 and is fixed thereto by a spring pin 25. The pin 25 also serves to locate the member 24 centrally between the wall portions 12. The member 24 being rigidly fixed to the drive shaft 15 is able to rotate freely in the bearings 13 and 14 under the influence of the drive motor 16, and thereby pivot the closure member 104 between its open and closed positions.

When material is passing from the duct 2 to the container 3 the closure member 104 is, of course, in its open position. When it is wished to interrupt the flow of material through the valve assembly 1, the closure member 104 is pivoted and enters the shear ring 9. Any hard granular material in the path of closure will be sheared between the co-operating complementary surfaces of the shear ring 9 and the closure member 104. At the end of the closure stroke, these surfaces are fully mated and the inflatable sealing ring 27 is then caused to deform out of the recess 26 by the introduction of compressed fluid into the cross-drillings 34. The passageway 100 is thus sealed gas-tight.

When it is required to re-open the valve assembly the fluid pressure behind the sealing ring 27 is released and the sealing ring retracts into recess 26 as a result of the restorative memory inherent in the elastomeric material of the sealing ring 27.

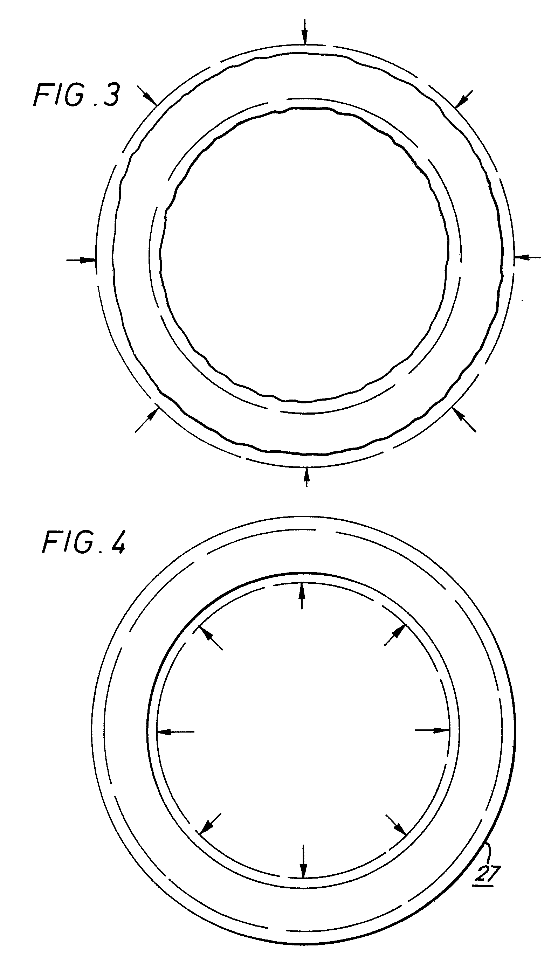

Figure 3 illustrates graphically the advantages of the present invention. Figure 3a shows schematically a plan view of a substantially annular sealing ring of a know valve assembly. In this known arrangement the sealing ring is mounted to surround a valve aperture into which a closure member is arranged to seat. The position of the sealing ring in the open position is shown in dashed lines in Figure 3a. The valve is sealed by applying fluid pressure to the outer surface of the sealing ring. In order to expand to meet the closure member the inner surface of the sealing ring must undergo a dimensional reduction. This combined expansion and reduction can produce a distortion of the sealing ring as shown in full lines in Figure 3a. Although in Figure 3a the effect has been emphasized for clarity it will be appreciated that the distortion inhibits complete surface contact conditions.

Figure 3b shows schematically a plan view of a sealing ring 27 of a valve assembly of the present invention. Again, the ring is shown by dashed lines in the open position of the valve assembly and in full lines in the closed position of the valve assembly in which the sealing ring is inflated. It will immediately be apparent that the sealing ring of Figure 3b does not have the distortion problems of the earlier arrangement shown in Figure 3c.

When replacement of the sealing ring 27 is necessary the closure member 104 can be moved manually through the cylindrical passage 100 to project beyond its closed position. This is achieved by disconnecting the closure member 104 from the drive motor 16 and by removing the cylindrical retaining member 7. This movement is facilitated by the shape of the closure member 104, which is tapered beneath its outer surface 10, and by the U-shaped configuration of the support 24.

It will be appreciated that variations and modifications to the valve assembly as described and illustrated may be made within the scope of the appended claims. For example, the application of the valve assembly is not limited to controlling the flow of bulk materials between a hopper or pipeline and a pressure vessel chamber. The valve assembly is useful in any application where a fluid or gas-tight pressure seal is required. Of course, the configuration of the valve assembly will be adapted to suit the particular circumstances of its installation.

Where a particularly secure seal is needed more than one sealing ring, as 27, may be provided. For example, two or more coaxially arranged, annular recesses, as 26, could be formed in the closure member with a respective sealing ring reeived in each recess. The or each recess housing a sealing ring could be individually connected by appropriate conduits to the supply of compressed fluid. By this means sequential inflation of the sealing rings could be arranged. For example, the supply of compressed fluid could be controlled to first inflate the sealing ring nearest to the supply duct. Subsequently, after a time delay to allow residual material to clear from the closure area by gravity, the second and any subsequent sealing rings could be inflated. This would enable the subsequently expanded sealing rings to seal against relatively clean valve surfaces whereby the sealing effect would be improved.

In the embodiment described, the sealing ring is made of an elastomeric material. However, the ring could be made of a combination of elastomeric material and metallic material to enable partial expansion only of the sealing ring.

## Claims

1. A valve assembly (1) comprising a passageway (100), a valve aperture being defined within said passageway (100), and a closure member (104) mounted for pivotal movement into and away from said passageway between a closed position in which it extends within and closes said aperture and an open position, wherein said closure member (104) is pivotable relative to a pivot axis (15) which extends substantially at right angles to the longitudinal extent of said passageway such that in the open position of the closure member (104) the passageway (100) is substantially unobstructed, and further comprising an endless, deformable sealing member (27) for sealing the aperture in the closed position of said closure member (104), characterised in that the pivot axis (15) relative to which said closure member (104) is pivotable is spaced laterally of the longitudinal extent of said passageway (100), in that said deformable sealing member (27) is carried by and surrounds said closure member (104) and in that means (5, 34) for deforming said sealing member (27) outwardly are provided whereby in the closed position of said closure member said sealing member is caused to engage said valve aperture and to seal the closure member relative to the aperture.

2. A valve assembly as claimed in Claim 1, wherein at least one further endless, deformable sealing member is carried by and surrounds said closure member (104), and wherein means are provided for deforming the or each further sealing member outwardly.

3. A valve assembly as claimed in Claim 1 or 2, wherein the or each said endless sealing member is a sealing ring (27) and is received in a substantially annular recess (26) formed in an outer surface of said closure member (104), and wherein the or each sealing ring (27) has elastomeric properties, and wherein said deforming means (5, 34) are arranged to supply fluid under pressure to an inner surface of said ring in a manner to cause natural expansion of the sealing ring (27).

4. A valve assembly as claimed in Claim 3, wherein the sealing ring (27) has a circular cross-section, and wherein the whole sealing ring is arranged to be moved outwardly from the recess by the supply of pressurised fluid.

5. A valve assembly as claimed in Claim 4, wherein the sealing ring (27) is made of an elastomeric material

6. A valve assembly as claimed in Claim 4, wherein the sealing ring (27) is made of a combination of an elastomeric material and a metallic material.

7. A valve assembly as claimed in any preceding claim, wherein said passageway (100) is substantially cylindrical and said valve aperture is a substantially annular inner surface defined around the inner surface of said passageway, and wherein said closure member (104) is formed to have a substantially annular outer surface (105) arranged to co-operate with said annular inner surface, and wherein said sealing member (27) is carried by said annular outer surface.

8. A valve assembly as claimed in Claim 7, wherein the shape of said annular inner and outer surfaces are complementary, said outer surface (105) having a partial male toroidal form and said inner surface having a partial female toroidal form.

9. A valve assembly as claimed in any of Claim 7 or 8, wherein said inner surface is the inner surface of a shear ring (9) of rigid or semi-rigid construction retained in a recess in the inner surface of said substantially cylindrical passageway (100).

10. A valve assembly as claimed in any of Claims 7 to 9, wherein said closure member (104) comprises a substantially circular cone around which said annular outer surface (105) extends.

11. A valve assembly as claimed in any preceding claim, wherein said closure member (104) is mounted on a support member (24), and said support member is mounted on a shaft for (15) pivotal movement about the axis of the shaft which defines said pivot axis.

12. A valve assembly as claimed in Claim 11, wherein said shaft (15) is coupled to a drive motor, and said drive motor is provided with stops limiting the angles of pivotal movement thereof, and hence of said closure member, and wherein said pivotal movement is limited to approximately 80°.

13. A valve assembly comprising a substantially cylindrical passageway (100), a substantially annular inner surface defined around the inner surface of said passageway defining a valve aperture, and a closure member (104) movable between a closed position in which it extends within and closes said aperture, and an open position in which said passageway is substantially unobstructed by said closure member, said closure member (104) having a substantially annular outer surface (105) arranged to co-operate with said annular inner surface in said closed position, and further comprising an endless, deformable sealing ring (27) carried by and surrounding said closure member, and means (5, 34) for deforming said sealing member (27) radially outwardly whereby in the closed position said sealing ring is caused to engage said aperture and to seal the closure member relative to said valve aperture.

14. A valve assembly as claimed in Claim 13, further comprising the features of any of Claims 1 to 12.

FIG.1

EP 0 348 217 A2

FIG. 2

*FIG .3*

*FIG .4*

27